(19) Europäisches Patentamt
European Patent Office
Office européen des brevets

(11) Veröffentlichungsnummer: **0 382 742 B1**

(12) **EUROPÄISCHE PATENTSCHRIFT**

(45) Veröffentlichungstag der Patentschrift:
27.12.91 Patentblatt 91/52

(51) Int. Cl.⁵: **B01D 46/34**, B01J 8/12,
B01D 53/08

(21) Anmeldenummer: 88907669.1

(22) Anmeldetag: 15.09.88

(86) Internationale Anmeldenummer:
PCT/EP88/00844

(87) Internationale Veröffentlichungsnummer:
WO 89/02779 06.04.89 Gazette 89/08

(54) Verfahren zur Führung eines Schüttgutstroms in mindestens einem Wanderbettreaktor und Reaktoranlage zur Durchführung des Verfahrens.

(30) Priorität: 25.09.87 DE 3732424

(43) Veröffentlichungstag der Anmeldung:
22.08.90 Patentblatt 90/34

(45) Bekanntmachung des Hinweises auf die Patenterteilung:
27.12.91 Patentblatt 91/52

(84) Benannte Vertragsstaaten:
AT BE CH DE FR GB IT LI LU NL SE

(56) Entgegenhaltungen:
WO-A-87/00768
DE-A- 2 004 966
FR-A- 400 436
US-A- 2 766 534

(73) Patentinhaber: STEAG AG
Bismarckstrasse 54 Postfach 10 37 62
W-4300 Essen 1 (DE)

(72) Erfinder: BRÜGGENDICK, Hermann
Dorstener Strasse 32
W-4224 Hünxe (DE)
Erfinder: KLINGINGER, Karl
Tamperestrasse 30
W-4300 Essen 14 (DE)

## Beschreibung

Die Erfindung bezieht sich zunächst auf ein Verfahren zur Führung eines Schüttgutstroms in mindestens einem Wanderbettreaktor, bei dem das Schüttgut im oberen Ende des Wanderbettreaktors über eine erste Gleitfläche aufgegeben wird und an seinem Auslaß über eine zweite Gleitfläche abgezogen wird, wobei auf beiden Gleitflächen das Schüttgut allein unter Schwerkrafteinfluß in der Neigungsrichtung gefördert wird.

Wanderbettreaktoren dienen allgemein dazu, ein Gas mit einem als Schüttgut verfügbaren Feststoff in innigen Kontakt zu bringen, um eine Reaktion und/oder Adsorption zwischen Gas und Feststoff herbeizuführen. Solche Reaktoren werden eingesetzt bei der katalytischen Umsetzung von Gasen, der Adsorption von Gasen oder der Feinstaubfilterung. Im allgemeinen wird das Schüttgut von oben nach unten durch den Reaktor geführt, während das Gas im Quer- oder Gegenstrom über den Feststoff geleitet wird. Der Gegenstrombetrieb ermöglicht im allgemeinen den besseren Kontakt und die bessere Verteilung zwischen den beiden Phasen und ist daher effektiver (höherer Wirkungsgrad). Die praktische Realisierung von Reaktoranlagen der eingangs genannten Art begegnete jedoch erheblichen Problemen und ist bisher zumindest großtechnisch noch nicht gelöst.

Aus der DE-A-33 13 943 ist ein Wanderbettreaktor bekannt, bei dem das Schüttgut über die erste geneigte Gleitfläche zentral in die Reaktionskammer eingegeben wird. Nach Passieren der Reaktionskammer gelangt das Schüttgut in eine darunter befindliche Regenerierungseinrichtung. Es verläßt diese über die zweite geneigte Gleitfläche und gelangt zum Fuße eines senkrechten Förderschachtes, innerhalb dessen es zur ersten geneigten Gleitfläche nach oben wandert. Bei vielen Einsatzfällen derartiger Reaktoren, so beispielsweise bei der Schadstoffbeseitigung von Rauchgasen, muß das Gas mehrstufig in verschiedenen Reaktoren behandelt werden. Zunächst durchläuft das Rauchgas zumindest einen Reaktor, in welchem eine $SO_2$-Reinigung stattfindet. Erst danach erfolgt in einer weiteren Reaktorstufe eine $NO_x$-Reduktion. Bei Großanlagen, beispielsweise bei Kraftwerksanlagen, ist der anfallende Rauchgasvolumenstrom so erheblich, daß er nur in parallelen Reaktorstufen bestimmungsgemäß behandelt werden kann. In diesen großtechnischen Einsatzfällen müssen daher Reaktoranlagen geschaffen werden, die aus mehreren sowohl gleichals auch verschiedenartigen Behandlungsarten dienenden Reaktormodulen bestehen. Eine modulartige Zusammenfassung mehrerer Wanderbettreaktoren der bekannten Bauart ist vor allen Dingen deshalb nicht möglich, weil sich die Einrichtungen zum Zuführen, Abführen und Fördern des Schüttgutes nicht parallel und/- oder in Serie schalten lassen. Zudem bedingen die bekannten Reaktoren ein relativ großes Bauvolumen.

Es ist daher Aufgabe der Erfindung, ein Verfahren zur Führung des Schüttgutstroms der eingangs genannten Art anzugeben, bei dem bei modulartigem Aufbau einer Wanderbettreaktoranlage in Parallel- und/oder Serienschaltung die Schüttgutzufuhr- und -abfuhr auf besonders kurzen Wegen und auf einfache Weise durchgeführt werden kann.

Diese Aufgabe wird dadurch gelöst, daß das Schüttgut von einer Stelle oberhalb und seitlich des Reaktors entlang der ersten geneigten Gleitfläche und hinter dem Auslaß über die in gleicher Richtung geneigte zweite Gleitfläche seitlich abgefördert wird, wobei bei einer Parallel- und/oder Serienschaltung von Reaktoren das einem Reaktor aufzugebende Schüttgut aus einem mehreren Reaktoren gemeinsamen Schüttgutstrom abgezweigt wird und mehrere Schüttgutströme nach getrennter Abförderung über geneigte Gleitflächen in einem Abführschacht zusammengeführt werden.

Durch diese Führung des Schüttgutstroms ist bei kompakter Bauweise eine modulartige Parallel- und/oder Serienschaltung von Reaktoren mit einfacher Schüttgutzufuhr und -abfuhr auf kurzen Wegen möglich, da bei dem einzelnen Reaktor diesem das Schüttgut an einer Seite zugeführt und an der anderen Seite entnommen wird.

In bevorzugter Weise ist vorgesehen, daß der gemeinsame Schüttgut-Abführstrom einem entgegengerichteten Gasstrom ausgesetzt wird und daß die vom Gasstrom mitgerissenen Staubteilchen abgefiltert werden. Mit demselben Gasstrom läßt sich auch die Sinkgeschwindigkeit der im gemeinsamen Abführstrom abgeführten Schüttgutteilchen beeinflußen.

Dabei wird weiter bevorzugt, daß durch Änderung des Gasstroms die Sinkgeschwindigkeit der im gemeinsamen Abführstrom abgeführten Schüttgutteilchen beeinflußt wird.

Da eine Kondensatbildung zu einer Transportbehinderung führen könnte, ist weiterhin in zweckmäßiger Ausgestaltung vorgesehen, daß der Gasstrom durch Wärmetausch mit wenigstens einer Reaktionskammer zur Vermeidung einer Kondensatbildung vorgewärmt wird.

Die Erfindung richtet sich auch auf eine Reaktoranlage, insbesondere Wanderbettreaktoranlage mit
- indestens einer Reaktionskammer, die wenigstens einen Einlaß und wenigstens einen Auslaß zum Durchsatz eines als Schüttgut vorliegenden Feststoffes von oben nach unten im Gegenstrom zu einem Gas aufweist,
- wenigstens einem Anströmboden, durch den das Gas von unten nach oben in das in der Reaktionskam-

2

mer befindliche Schüttgut geleitet wird,

– wenigstens einer oberhalb der Reaktionskammer angeordneten ersten Gleitfläche für das Schüttgut, die an ihrem oberen Ende in einen Aufgabeschacht oder -trichter mündet und den Einlaß der Reaktionskammer mit Schüttgut speist, und

– wenigstens einer unterhalb des Auslasses angeordneten zweiten Gleitfläche für das Schüttgut,

– wobei die Gleitflächen zur Horizontalen soweit geneigt sind, daß das Schüttgut allein unter Schwerkrafteinfluß in der Neigungsrichtung gefördert wird.

Erfindungsgemäß ist zur Ausbildung einer Reaktoranlage vorgesehen, daß sie modulartig in Parallel- und-/oder Serienschaltung zusammenbaubar ist und einen geringen Platzbedarf aufweist, daß die erste Gleitfläche und die zweite Gleitfläche in derselben Richtung geneigt sind.

Das Schüttgut wird also dem Reaktor an der einen Seite zugeführt und an der anderen Seite entnommen. Damit lassen sich Parallel- und/oder Serienschaltungen realisieren. Auch erfolgen die Zufuhr und die Abfuhr des Schüttgutes auf die denkbar einfachste Weise, nämlich einzig und allein unter der Wirrung der Schwerkraft. Die erfindungsgemäße Reaktoranlage benötigt ein Minimum an Raum.

Vorzugsweise ist die erste Gleitfläche als Schüttgutverteilungsboden vorgesehen. Sie vereinigt also die Funktionen der Querförderung des Schüttguts und dessen Verteilung über den gesamten Querschnitt der Reaktionskammer. Die entsprechenden Materialanteile werden, ausgehend von der Gleitfläche, durch an sich bekannte Mittel, wie klappen, Schieber o. dgl. in die Einlässe der Reaktionskammer eingeführt. Solche Gleitflächen als Zuteil- und Verteilungsboden arbeiten ohne bewegte Teile und sind unabhängig von der Funktion eines Antriebs. Sie sind daher nicht nur billiger, sondern auch zuverlässiger.

Vorzugsweise bildet der die erste Gleitfläche tragende Schüttgutverteilungsboden die Bodenwand eines flachen Kanals. Diese Bodenwand des Kanals grenzt unmittelbar an den Reaktionsraum der zugehörigen Reaktionskammer an, so daß das im Kanal befindliche Schüttgut durch den Schüttgutverteilungsboden mit dem Innenraum der zugehörigen Reaktionskammer in wärmetauschender Beziehung steht. Auf diese Weise wird das Schüttgut von dem Reaktor vorgewärmt und eine Kondensation im Verteilungskanal verhindert.

Besonders eignet sich ein nach dem Erfindungsprinzip aufgebauter Reaktor als Modul in einer mehrstufigen Reaktoranlage. Bei einem bevorzugten Ausführungsbeispiel der Erfindung sind mehrere Reaktionskammern übereinander angeordnet, wobei die Gleitflächen mehrerer übereinander angeordneten Reaktionskammern mit ihren jeweils oberen Enden von einem gemeinsamen, vorzugsweise vertikal verlaufenden Zuführschacht abgezweigt sind und wenigstens ein Teil der zweiten Gleitflächen mit ihren unteren Enden in einem gemeinsamen Schüttgutabführschacht münden, durch den das Schüttgut unter Schwerkrafteinfluß abgeführt wird.

Anders als herkömmliche angetriebene Förderer leistet sowohl ein geneigter Schüttgut-Verteilungskanal als auch ein geneigter Abführkanal, in denen das Schüttgut allein unter Schwerkrafteinfluß quer zur Durchsatzrichtung der Reaktionskammer zu- und abgeführt werden kann, nur einen geringen Beitrag zur Gesamthöhe einer Reaktionskammernkolonne. Dies liegt vor allem daran, daß zumindest die der Zuführung dienende erste Gleitfläche direkt auf der Reaktordeckwand ausgebildet sein kann und der Zuführkanal nur eine sehr geringe Bauhöhe hat. Eine noch gedrängtere Bauweise läßt sich bei einer Kolonne von übereinander angeordneten Reaktionskammern dadurch erreichen, daß ein Schüttgutverteilungskanal, der bodenseitig von der ersten geneigten Gleitfläche begrenzt ist, eine Deckwand hat, an deren Oberseite die einer darüberliegenden Reaktionskammer zugeordnete, der Schüttgutabführung dienende zweite geneigte Gleitfläche ausgebildet ist. Dabei können die das Schüttgut zuführenden und abführenden Gleitflächen paarweise etwa gleiche Neigungswinkel haben. Vorzugsweise erweitert sich aber der Abstand zwischen der ersten geneigten Gleitfläche und der darüberliegenden Deckwand des Schüttgutverteilungskanals in Strömungsrichtung. Bei leichter Aufweitung des in der Regel mit kastenförmigem Querschnittsprofil versehenen Schüttgutverteilungskanals wird selbst bei engen Öffnungsquerschnitten die Gefahr von Verstopfungen des Verteilungskanals minimiert.

Vorzugsweise tauchen mehrere etwa vertikal verlaufende Einlaßrohre von jedem geneigten Schüttgutverteilerboden aus nach unten in die Reaktionskammer ein. Ferner sind ebenfalls vorzugsweise mehrere Feststoffauslaßrohre von jedem Anströmboden nach unten durch eine Reaktionskammer-Bodenwand geführt. Zur Minimierung einer Verstopfungsgefahr im Einlaß und Auslaß sind die Einlaßrohre und/oder die Auslaßrohre von oben nach unten leicht trompetenförmig aufgeweitet.

Für großtechnische Einsatzfälle mit einer Mehrzahl von Reaktionskammern eignet sich vor allem eine Reaktoranlage, bei der wenigstens zwei Kolonnen aus übereinander angeordneten Reaktorstufen nebeneinander angeordnet sind.

Der Schüttgutabführschacht kann in Weiterbildung der Erfindung auch zur Sichtung der Staubbeladung des Schüttguts ausgenutzt werden. Dies geschieht dadurch, daß ein Gaseinlaß am unteren Ende und eine Filtereinrichtung am oberen Ende eines Schüttgutabführschachtes angeordnet sind. Dieser Gaseinlaß kann mit einer Gas-Vorwärmkammer verbunden sein, die zwischen zwei nebeneinander gelegenen, insbesondere zwischen den untersten Reaktionskammern angeordnet und durch Wärmetausch mit letzteren beheizbar ist.

Die Reaktionskammern haben vorzugsweise ebenso wie die geneigten Zuführ- und Abführkanäle einen rechteckigen Querschnitt.

Im Bereich der Abzweigstellen der Gleitflächen im Schüttgutzuführschacht können Mittel, z.B. Schultern oder Stufen, zum Ablenken des Schüttgutstroms vorgesehen sein.

Die Neigung der Bodenwand der Reaktionskammer bzw. einer bodenseitigen Gas-Abschlußwand parallel zu den das Schüttgut abführenden geneigten Gleitflächen kann in Weiterbildung der Erfindung dazu genutzt werden, aus dem Gasstrom in der Reaktionskammer abgeschiedene Feststoffteilchen, insbesondere Staub, zu einer Reaktionskammerstelle im Bodenbereich unter Schwerkrafteinfluß zu fördern, von wo sich die Feststoffteilchen leicht austragen lassen. Zu diesem Zweck ist im Bereich des unteren Endes der geneigten Abschlußwand in einer Reaktionskammerwand eine vorzugsweise schlitzförmige Austrittsöffnung ausgebildet, durch die abgeschiedene Feststoffteilchen in den Abführkanal oder den Abführschacht austragbar sind.

Weitere Vorteile, Einzelheiten und Wirkungen der Erfindung ergeben sich aus der nachfolgenden Beschreibung der Zeichnung, in der Ausführungsbeispiele der Erfindung schematisch dargestellt sind. In der Zeichnung zeigen:

Fig. 1 ein Ausführungsbeispiel einer Reaktoranlage mit einer einzigen Reaktionskammer, an der das Erfindungsprinzip verwirklicht ist; und

Fig. 2 schematisch das Prinzip einer großtechnischen Reaktoranlage unter Verwendung von Reaktionskammern der in Fig. 1 gezeigten Art, die modulartig über- und nebeneinander gebaut und zu einer kompakten Baueinheit kombiniert sind.

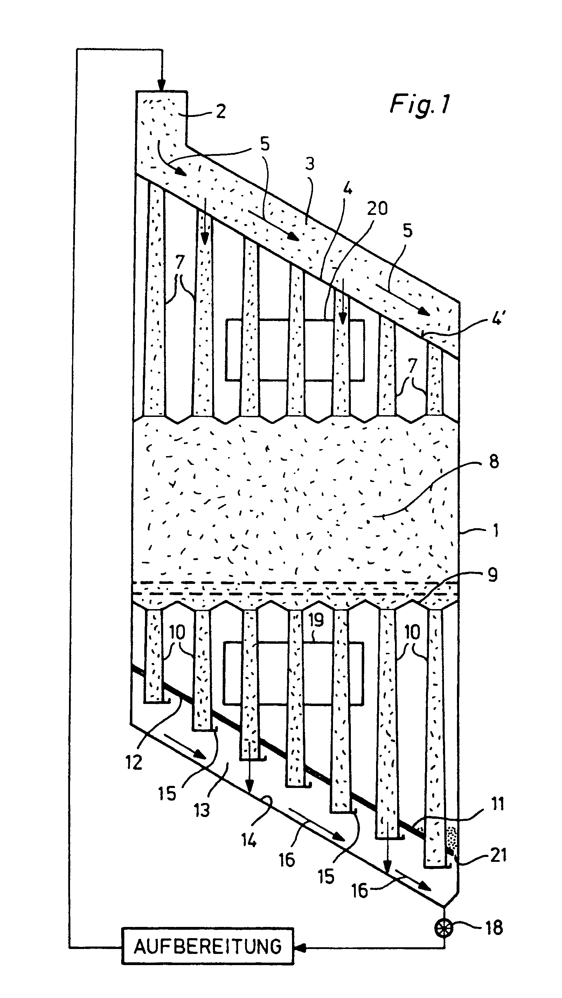

In Fig. 1 ist schematisch eine Reaktoranlage mit einer einzigen Reaktionskammer 1 gezeigt.

Die Reaktionskammer 1 hat bei den beschriebenen Ausführungsbeispielen einen rechteckigen Horizontalquerschnitt. Über der Reaktionskammer 1 ist eine Schüttgut-Zuführ- und -Verteilvorrichtung angeordnet. Zu dieser gehören ein Aufgabetrichter oder -schacht 2 und ein zur Horizontalebene etwa unter 45° geneigter, kastenförmiger Schüttgut-Verteilungskanal 3. Der Verteilungskanal 3 weist einen Verteilungsboden 4 auf, der auch die Deckwand für die Reaktionskammer 1 bildet. Auf der Oberseite des Verteilungsbodens 4 ist eine geneigte Gleitfläche 4' gebildet, deren Neigungswinkel und Oberflächenbeschaffenheit so gewählt sind, daß das Schüttgut, welches im Betrieb in der Regel den ganzen Verteilungskanal füllt, bei Schüttgutabzug nach unten in den Reaktionsraum der Reaktionskammer 1 allein unter Eigengewicht schräg zur Seite und nach unten (Pfeile 5) bewegt wird.

In den geneigten Verteilungsboden 4 münden mehrere Einlaßrohre 7. Sie sind bei dem hier beschriebenen Ausführungsbeispiel des Reaktors durch nicht gezeigte Mittel, beispielsweise Schieber, Klappen o.dgl. verschließbar. Die Einlaßrohre 7 verlaufen von dem Verteilungsboden 4 aus senkrecht nach unten in den Reaktionsraum und enden unmittelbar über einem Reaktorbett 8. Sie haben entsprechend der Neigung des Verteilungsbodens 4 unterschiedliche Längen, so daß ihre unteren Enden etwa in einer horizontalen Ebene liegen.

Die Unterseite des Reaktorbetts 8 ist durch einen geeigneten Anströmboden 9 begrenzt. Letzterer kann herkömmlicher Ausführung sein und wird hier nicht weiter beschrieben. Das (verbrauchte) Schüttgut, beispielsweise Aktivkohle, wird von dem Anströmboden 9 aus durch Auslaßrohre 10 vertikal nach unten geleitet. Die Auslaßrohre sind im Bereich des Bodens der Reaktionskammer 1 zunächst durch eine geneigte Gas-Abschlußwand 11 und danach durch eine zur Wand 11 parallel verlaufenden Reaktionskammer-Bodenwand 12 durchgeführt. Die Auslaßrohre 10 münden in einem Abführkanal 13, der ähnlich dem Verteilungskanal 3 im wesentlichen über die gesamte Breite der Reaktionskammer 1 verläuft und zur Horizontalebene geneigt ist. An den unteren, in den Abführkanal 13 vorstehenden Enden der Auslaßrohre 10 sind Schieber 15 zum wahlweisen Schließen der Auslaßrohre 10 angeordnet.

Die Bodenwand des kastenförmigen Abführkanals 13 ist mit einer geneigten Gleitfläche 14 versehen. Die Neigung (Neigungswinkel zur Horizontalebene zwischen etwa 40 und 50°, vorzugsweise etwa 45°) sowie die Oberflächenbeschaffenheit der Gleitfläche 14 sind so gewählt, daß nach Öffnen der Schieber 15 aus den Auslaßrohren 10 austretendes Schüttgut zur rechten Seite hin allein unter Schwerkrafteinfluß seitlich (Pfeile 16) abgefördert wird. Am rechten unteren Ende des Abführkanals 13 wird das Schüttgut aufgefangen und in bekannter Weise über eine Zellenradschleuse beispielsweise zu einer Aufbereitung geführt. Aus der Aufbereitung kann das Schüttgut gegebenenfalls zum Aufgabeschacht 2 zurückgeführt werden.

Während das Schüttgut in der gesamten Reaktoranlage unter Eigengewicht von oben nach unten gefördert wird, wird Gas im Gegenstrom dazu durch das Reaktorbett 8 von unten nach oben strömen gelassen. Dieses Gas tritt in dem in Fig. 1 dargestellten Beispiel unterhalb des Anströmbodens 9 durch ein Fenster 19 in die Reaktionskammer 1 ein. Das Gas strömt nach oben durch das Reaktorbett 8 und tritt oberhalb des Bettes 8, d.h. oberhalb der Schüttkegel an den Enden der Einlaßrohre 7 durch ein Austrittsfenster 20 aus.

In vielen Fällen ist das Gas mit erheblichen Mengen an Feststoffteilchen, insbesondere Staub, beladen.

Diese Feststoffteilchen werden teilweise an den Umlenkstellen aus dem Gasstrom abgeschieden und fallen in der Reaktionskammer 1 schon unterhalb des Anströmbodens 9 nach unten auf die Gas-Abschlußwand 11. Da deren Verlauf etwa parallel zur Gleitfläche 14 ist, also eine entsprechende Neigung hat, gleiten die feinen Feststoffteilchen in Fig. 1 nach rechts und sammeln sich in der rechten unteren Ecke des Reaktorinnenraums. An dieser Stelle ist eine in der Regel schlitzförmige Durchgangsöffnung 21 vorgesehen, durch die die feinen Feststoffteilchen aus dem Innenraum der Reaktionskammer 1 in den Abführkanal 13 - wiederum unter Schwerkrafteinfluß - ausgetragen werden.

Der Verteilungskanal 3 und zumindest die Abführrohre 10, teilweise aber die Zuführrohre 7 sind im Betrieb mit Schüttgut gefüllt. Das Schüttgut wandert aber zumindest bei Öffnen der Schieber 15 unter Schwerkrafteinfluß von oben nach unten. Bei Öffnen der Verschlußorgane zu den Einlaßrohren 7 fällt Schüttgut aus dem Verteilungskanal 3 in die oberen Enden der Rohre 7, und der Rest des im geneigten Kanals 3 befindlichen Schüttguts rutscht ebenfalls unter Schwerkrafteinfluß von links nach rechts nach. Der Abstand zwischen den Boden- und Deckwänden der beiden Kanäle 3 und 13 liegt für die meisten Anwendungsfälle im großtechnischen Einsatz vorzugsweise zwischen ca. 150 bis 250 mm. Im Interesse einer Kompaktbauweise sollte dieser Abstand minimal gehalten werden. Bei minimalen Vertikalabmessungen der beiden Kanäle, insbesondere des Verteilungskanals 3 sollte der Abstand zwischen dem Verteilungsboden 4 und der Deckwand des Verteilungskanals 3 in Strömungsrichtung, d.h. in Richtung der Pfeile 5, leicht zunehmen. Ebenfalls zur Minimierung der Verstopfungsgefahr können sowohl die Einlaßrohre 7 als auch die Auslaßrohre 10 entsprechend der Darstellung in Fig. 1 von oben nach unten leicht trompetenförmig erweitert sein.

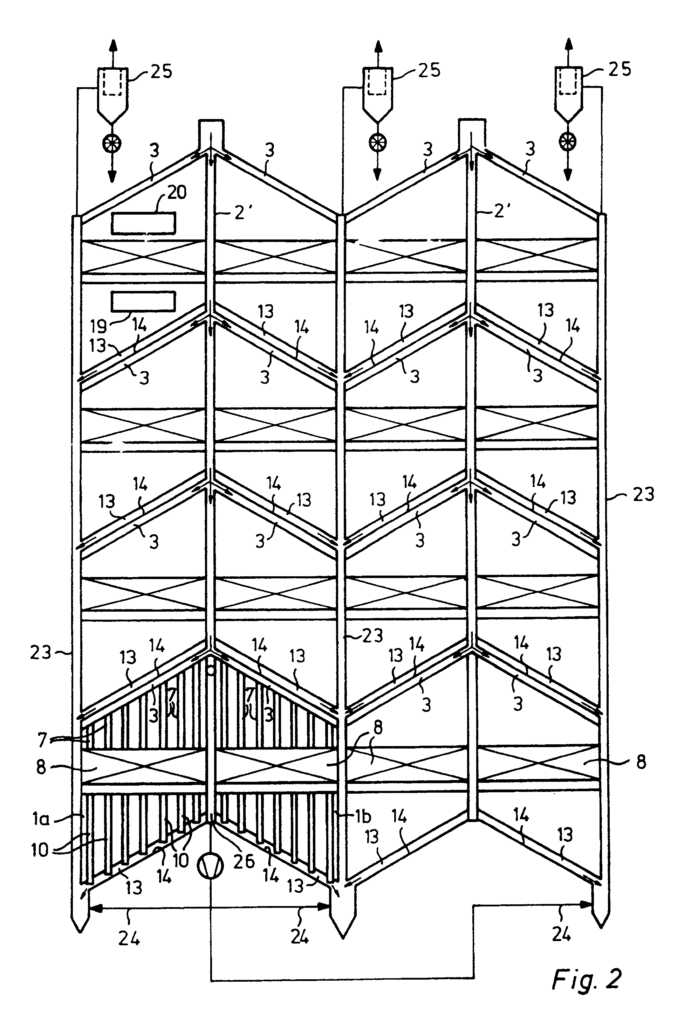

Bei der in Fig. 2 dargestellten Reaktoranlage ist eine Vielzahl von Reaktionskammern 1 ähnlich derjenigen gemäß Fig. 1 mit den erfindungsgemäß gestalteten Schüttgut-Zuführ- und -Abführeinrichtungen modulartig zu einer besonders kompakten Baueinheit zusammengefaßt. Bezüglich des Aufbaus und der grundsätzlichen Funktionsweise jeder einzelnen Reaktorstufe kann auf die einstufige Reaktoranlage gemäß Fig. 1 Bezug genommen werden. Die konstruktiven Einzelheiten sind in Fig. 2 für die meisten Reaktorstufen fortgelassen; nur zwei nebeneinander angeordnete Reaktionskammern 1a und 1b sind mit den Einlaß- und Auslaßrohren 7 und 10 dargestellt, während diese Einzelheiten in den anderen vierzehn Reaktionskammern der Reaktoranlage nicht gezeigt sind.

Bei dem Ausführungsbeispiel gemäß Fig. 2 sind jeweils vier Reaktionskammern 1 übereinander und vier nebeneinander angeordnet. Jeweils zwei benachbarte Kolonnen von übereinander angeordneten Reaktionskammern werden über einen gemeinsamen vertikalen Zuführschacht 2' mit Schüttgut versorgt. Von diesem Schüttgutschacht 2' gehen beidseitig fischgrätenartig jeweils schräg nach außen geneigte Verteilungskanäle 3 aus. Jeder Verteilungskanal 3 endet im Bereich der Seitenwand der zu versorgenden zugehörigen Reaktionskammer. Wie zu sehen ist, werden über jeden Zuführschacht 2' acht Verteilungskanäle 3 versorgt. Die mit der Gleitfläche 14 versehene Bodenwand jedes Abführkanals 13 bildet gleichzeitig die Deckwand eines darunterliegenden Verteilungskanals 3.

Die Abführkanäle 13 der zu einer Reaktorkolonne gehörigen übereinander angeordneten Reaktionskammern bzw. -stufen 1 münden in einen gemeinsamen Schüttgut-Abführschacht 23. Der mittlere Schüttgut-Abführschacht 23 zwischen den beiden mittleren Reaktorkolonnen wird von beiden Seiten aus den angrenzenden Abführkanälen 13 mit Schüttgut beschickt. Das Schüttgut fällt durch die Abführschächte 23 nach unten und wird am unteren Ende jedes Schachts abgeführt. Bei dem in Fig. 2 dargestellten Ausführungsbeispiel ist am unteren Ende jedes Abführschachts 23 ein Gaseinlaß 24 vorgesehen, durch den im Betrieb Gas in den Abführschacht 23 geleitet und entgegen der Fallrichtung des Schüttguts vertikal nach oben zu einer am oberen Ende angeordneten Filtereinrichtung 25 geführt wird. Durch die nach oben gerichteten Gasströme in den Abführschächten 23 tritt eine gewisse Sichtung des Schüttgutes ein, und die relativ leichten Feststoffteilchen werden nach oben zu der zugehörigen Filtereinrichtung 25 mitgerissen und dort abgeschieden. Gleichzeitig kann mit Hilfe des nach oben gerichteten Gasstroms die Sinkgeschwindigkeit des Schüttguts in geeigneter Weise gesteuert werden. Der Gasstrom wird vor dem Eintritt durch die Eintrittsöffnung 24 in einer Vorwärmkammer 26 vorgewärmt, die zwischen den beiden Reaktionskammern 1a und 1b in einem Raum angeordnet ist, der unterhalb der untersten Abzweigstelle des Zuführschachts 2' liegt. In diesem Bereich findet über die beiden benachbarten Wände der angrenzenden Reaktionskammern 1a und 1b ein besonders intensiver Wärmetausch statt, der die Vorwärmung des Sichtergases begünstigt. Es findet auch eine Vorwärmung des Schüttguts in den geneigten Verteilungskammern 3 statt, und zwar während der Verweilzeit des Schüttguts in den zugehörigen Zuführ- bzw. Verteilungskanälen 3.

Die unmittelbare Übereinanderanordnung der Reaktionskammern 1, der Verteilungskanäle 3 und der Abführkanäle mehrerer übereinander angeordneter Reaktorstufen optimiert die Kompaktbauweise. Die Aufteilung der Reaktorkammern in kleinere Baueinheiten und die fischgrätenartige Anordnung (Fig. 2) verringert auch die Bauhöhe der Reaktoranlage. Die bisher durch besondere Antriebe und viele bewegte Teile problematische Zu- und Abführung des Schüttgutes ist bei der Erfindung optimal zuverlässig und bei minimalem Platzbedarf gelöst.

**Patentansprüche**

1. Verfahren zur Führung eines Schüttgutstromes in mindestens einem Wanderbettreaktor, bei dem das Schüttgut im oberen Ende des Wanderbettreaktors über eine erste Gleitfläche aufgegeben wird und an seinem Auslaß über eine zweite Gleitfläche abgezogen wird, wobei auf beiden Gleitflächen das Schüttgut allein unter Schwerkrafteinfluß in der Neigungsrichtung gefördert wird, dadurch gekennzeichnet, daß das Schüttgut von einer Stelle oberhalb und seitlich des Reaktors entlang der ersten geneigten Gleitfläche und hinter dem Auslaß über die in gleicher Richtung geneigte zweite Gleitfläche seitlich abgefördert wird, wobei bei einer Parallel- und-/oder Serienschaltung von Reaktoren das einem Reaktor aufzugebende Schüttgut aus einem mehreren Reaktoren gemeinsamen Schüttgutstrom abgezweigt wird und mehrere Schüttgutströme nach getrennter Abförderung über geneigte Gleitflächen in einem Abführschacht zusammengeführt werden.

2. Verfahren nach Anspruch 1, dadurch gekennzeichnet, daß der gemeinsame Schüttgut-Abführstrom einem entgegengerichteten Gasstrom ausgesetzt wird und daß die vom Gasstrom mitgerissenen Staubteilchen abgefiltert werden.

3. Verfahren nach Anspruch 2, dadurch gekennzeichnet, daß durch Änderung des Gasstroms die Sinkgeschwindigkeit der im gemeinsamen Abführstrom abgeführten Schüttgutteilchen beeinflußt wird.

4. Verfahren nach Anspruch 1 oder 2, dadurch gekennzeichnet, daß der Gasstrom durch Wärmetausch mit wenigstens einer Reaktionskammer zur Vermeidung einer Kondensatbildung vorgewärmt wird.

5. Reaktoranlage, insbesondere Wanderbettreaktoranlage mit
   – mindestens einer Reaktionskammer (1), die wenigstens einen Einlaß (7) und wenigstens einen Auslaß (10, 15) zum Durchsatz eines als Schüttgut vorliegenden Feststoffes von oben nach unten im Gegenstrom zu einem Gas aufweist,
   – wenigstens einem Anströmboden (9), durch den das Gas von unten nach oben in das in der Reaktionskammer befindliche Schüttgut geleitet wird,
   – wenigstens einer oberhalb der Reaktionskammer angeordneten ersten Gleitfläche (4') für das Schüttgut, die an ihrem oberen Ende in einen Aufgabeschacht oder -trichter (2; 2') mündet und den Einlaß der Reaktionskammer mit Schüttgut speist, und
   – wenigstens einer unterhalb des Auslasses angeordneten zweiten Gleitfläche (14) für das Schüttgut
   – wobei die Gleitflächen (4'; 14) zur Horizontalen soweit geneigt sind, daß das Schüttgut allein unter Schwerkrafteinfluß in der Neigungsrichtung gefördert wird, dadurch gekennzeichnet, daß die erste Gleitfläche (4') und die zweite Gleitfläche (14) in derselben Richtung geneigt sind.

6. Reaktoranlage nach Anspruch 5, dadurch gekennzeichnet, daß die erste Gleitfläche (4') als Schüttgutverteilungsboden (4) vorgesehen ist.

7. Reaktoranlage nach Anspruch 5 oder 6, dadurch gekennzeichnet, daß mehrere Reaktionskammern (1) übereinander angeordnet sind, wobei die ersten Gleitflächen (4') mehrerer übereinander angeordneter Reaktionskammern mit ihren jeweils oberen Enden von einem gemeinsamen, vorzugsweise vertikal verlaufenden Zuführschacht (2') abgezweigt sind und wenigstens ein Teil der zweiten Gleitflächen (14) mit ihren unteren Enden in einen gemeinsamen Schüttgutabführschacht (23) münden, durch den das Schüttgut unter Schwerkrafteinfluß abgeführt wird.

8. Reaktoranlage nach einem der Ansprüche 5 bis 7, dadurch gekennzeichnet, daß der die erste Gleitfläche (4') bildende Schüttgutverteilungsboden (4) die Bodenwand eines flachen Kanals (3) ist und daß das im Kanal befindliche Schüttgut durch den Schüttgutverteilungsboden mit dem Innenraum der zugehörigen Reaktionskammer (1) in wärmetauschender Beziehung steht, so daß es von dem Reaktor vorwärmbar ist.

9. Reaktoranlage nach Anspruch 7 oder 8, dadurch gekennzeichnet, daß ein Schüttgutverteilungskanal (3), der bodenseitig von der ersten geneigten Gleitfläche (4') begrenzt ist, eine Deckwand hat, an deren Oberseite die einer darüberliegenden Reaktionskammer zugeordnete, der Schüttgutabführung dienende zweite geneigte Gleitfläche (14) ausgebildet ist.

10. Reaktoranlage nach einem der Ansprüche 7 bis 9, dadurch gekennzeichnet, daß die das Schüttgut zuführenden ersten Gleitflächen (4') und die das Schüttgut abführenden zweiten Gleitflächen (14) paarweise im wesentlichen gleiche Neigungswinkel zur Horizontalen haben.

11. Reaktoranlage nach Anspruch 8 oder 9, dadurch gekennzeichnet, daß sich der Abstand zwischen der ersten geneigten Gleitfläche (4') und der darüberliegenden Deckwand des Schüttgutverteilungskanals in Strömungsrichtung (5) vergrößert.

12. Reaktoranlage nach einem der Ansprüche 5 bis 11, dadurch gekennzeichnet, daß mehrere Einlaßrohre (7) von jedem geneigten Schüttgutverteilerboden (4) aus nach unten in die Reaktionskammer (1) eintauchen.

13. Reaktoranlage nach einem der Ansprüche 5 bis 12, dadurch gekennzeichnet, daß mehrere Feststoffauslaßrohre (10) von dem Anströmbode nach unten durch eine Reaktionskammer-Bodenwand (12) geführt sind.

14. Reaktoranlage nach Anspruch 12 oder 13, dadurch gekennzeichnet, daß die Einlaßrohre (7) und/oder die Auslaßrohre (10) von oben nach unten leicht trompetenförmig aufgeweitet sind.

15. Reaktoranlage nach einem der Ansprüche 5 bis 14, dadurch gekennzeichnet, daß mehrere, vorzugsweise unterschiedlichen Behandlungsarten dienende Reaktionskammern (1) in Reihe geschaltet sind und nacheinander von dem Gas durchströmt werden.

16. Reaktoranlage nach Anspruch 14, dadurch gekennzeichnet, daß die zwei in Reihe geschalteten Reaktionskammern (1) paarweise seitlich versetzt zueinander angeordnet sind.

17. Reaktoranlage nach Anspruch 14, dadurch gekennzeichnet, daß die in Reihe geschalteten Reaktionskammern (1) übereinander angeordnet sind.

18. Reaktoranlage nach einem der Ansprüche 5 bis 17, dadurch gekennzeichnet, daß wenigstens zwei Kolonnen aus übereinander angeordneten Reaktorkammern (1) nebeneinander angeordnet sind.

19. Reaktoranlage nach einem der Ansprüche 5 bis 18, dadurch gekennzeichnet, daß ein Gaseinlaß (24) am unteren Ende und eine Filtereinrichtung (25) am oberen Ende eines Schüttgutabführschachtes (23) angeordnet sind.

20. Reaktoranlage nach Anspruch 19, dadurch gekennzeichnet, daß der Gaseinlaß (24) mit einer Gas-Vorwärmkammer (26) verbunden ist, die zwischen zweinebeneinander und insbesondere unten gelegenen Reaktionskammern (1a, 1b) angeordnet und durch Wärmetausch mit letzteren beheizbar ist.

21. Reaktoranlage nach einem der Ansprüche 7 bis 20, dadurch gekennzeichnet, daß im Bereich der Abzweigstellen der Gleitflächen (4') im Schüttgutzufuhrschacht (2') Mittel zum Ablenken des Schüttgutstroms vorgesehen sind.

22. Reaktoranlage nach einem der Ansprüche 5 bis 21, dadurch gekennzeichnet, daß jede Reaktionskammer (1) eine bodenseitige Gas-Abschlußwand (11) hat, die in der gleichen Richtung wie die unterhalb des Auslasses (10, 15) angeordnete zweite Gleitfläche (14) geneigt ist, und daß im Bereich des unteren Endes der Abschlußwand (11) in einer Reaktionskammerwand eine vorzugsweise schlitzförmige Austrittsöffnung (21) ausgebildet ist, durch die aus dem Gasstrom abgeschiedene Feststoffteilchen in den Abführkanal (13) oder Abführschacht (23) austragbar sind.

## Claims

1. A process for conveying a stream of loose material in at least one moving-bed reactor, in which the loose material is charged at the upper end of the moving-bed reactor via a first slide surface and, at the outlet of the reactor, is taken off via a second slide surface, the loose material being conveyed on both slide surfaces in the direction of inclination solely under the action of gravity, characterised in that the loose material is conveyed away from a point above and to the side of the reactor along the first inclined slide surface and, downstream of the outlet, to the side via the second slide surface inclined in the same direction and, in the case of a parallel and/or series arrangement of reactors, the loose material to be charged to a reactor is branched off from a stream of loose material common to a plurality of reactors, and a plurality of streams of loose material are, after being conveyed away separately via inclined slide surfaces, combined in a discharge shaft.

2. A process according to claim 1, characterised in that the common discharge stream of loose material is exposed to a gas stream in the opposite direction and that the dust particles entrained by the gas stream are filtered out.

3. A process according to claim 2, characterised in that the settling rate of the particles of loose material discharged in the common discharge stream is influenced by varying the gas stream.

4. A process according to claim 1 or 2, characterised in that the gas stream is preheated by heat exchange with at least one reaction chamber, in order to avoid formation of condensate.

5. A reactor installation, in particular a moving-bed reactor installation, having
– at least one reaction chamber (1) which has at least one inlet (7) and at least one outlet (10, 15) for putting through a solid present in the form of loose material downwards in counter-current to a gas,
– at least one inflow tray (9) through which the gas is passed upwards into the loose material located in the reaction chamber,
– at least one first slide surface (4') for the loose material, which slide surface is located above the reaction chamber and leads at its upper end into a charging shaft or hopper (2; 2') and feeds the inlet of the reaction chamber with loose material, and
– at least one second slide surface (14) for the loose material, located underneath the outlet,

7

– the slide surfaces (4'; 14) being inclined to the horizontal to such an extent that the loose material is conveyed in the direction of inclination solely under the action of gravity, characterised in that the first slide surface (4') and the second slide surface (14) are inclined in the same direction.

6. A reactor installation according to claim 5, characterised in that the first slide surface (4') is provided as a loose material distributor plate (4).

7. A reactor installation according to claim 5 or 6, characterised in that a plurality of reaction chambers (1) are arranged on top of one another, the upper ends of each of the first slide surfaces (4') of a plurality of reaction chambers arranged on top of one another being branched off from a common, preferably vertically extending feed shaft (2'), and the lower ends of at least a part of the second slide surfaces (14) leading into a common loose material discharge shaft (23), through which the loose material is discharged under the action of gravity.

8. A reactor installation according to any of claims 5 to 7, characterised in that the loose material distributor plate (4) forming the first slide surface (4') is the bottom wall of a shallow channel (3) and that the loose material present in the channel is in heat exchange connection through the loose material distributor plate with the interior of the respective reaction chamber (1), so that it can be preheated by the reactor.

9. A reactor installation according to claim 7 or 8, characterised in that a loose material distributor channel (3), which is delimited on the bottom side by the first inclined slide surface (4'), has a cover wall, at whose upper side the second inclined slide surface (14) belonging to a reaction chamber located above and serving for discharging the loose material is formed.

10. A reactor installation according to any of claims 7 to 9, characterised in that the first slide surfaces (4') feeding the loose material and the second slide surfaces (14) discharging the loose material have in pairs essentially the same angles of inclination to the horizontal.

11. A reactor installation according to claim 8 or 9, characterised in that the distance from the first inclined surface (4') to the cover wall, located above, of the loose material distributor channel increases in the direction of flow (5).

12. A reactor installation according to any of claims 5 to 11, characterised in that a plurality of inlet pipes (7) dip from each inclined loose material distributor plate (4) downwards into the reaction chamber (1).

13. A reactor installation according to any of claims 5 to 12, characterised in that a plurality of solids outlet pipes (10) lead down from the inflow tray through a reaction chamber bottom wall (12).

14. A reactor installation according to claim 12 or 13, characterised in that the inlet pipes (7) and/or the outlet pipes (10) are slightly flared downwards.

15. A reactor installation according to any of claims 5 to 14, characterised in that a plurality of reaction chambers (1), preferably serving for different types of treatment, are connected in series, the gas flowing through them successively.

16. A reactor installation according to claim 14, characterised in that the two series-connected reaction chambers (1) are arranged in pairs with a mutual lateral offset.

17. A reactor installation according to claim 14, characterised in that the series-connected reaction chambers (1) are arranged on top of one another.

18. A reactor installation according to any of claims 5 to 17, characterised in that at least two columns of reactor chambers (1) arranged on top of one another are arranged side by side.

19. A reactor installation according to any of claims 5 to 18, characterised in that a gas inlet (24) is provided at the lower end and a filter device (25) is provided at the upper end of a loose material discharge shaft (23).

20. A reactor installation according to claim 19, characterised in that the gas inlet (24) is connected to a gas-preheating chamber (26) which is provided between two reaction chambers (1a, 1b) located side by side and especially at the bottom, and can be heated by heat exchange with the latter.

21. A reactor installation as claimed in any of claims 7 to 20, characterised in that means of deflecting the stream of loose material are provided in the region of the branching points of the slide surfaces (4') in the loose material feed shaft (2').

22. A reactor installation according to any of claims 5 to 21, characterised in that each reaction chamber (1) has, on the bottom side, a gas-sealing wall (11) which is inclined in the same direction as the second slide surface (14) located underneath the outlet (10, 15), and that a preferably slot-shaped outlet orifice (21), through which solids particles precipitated from the gas stream can be discharged into the discharge channel (13) or discharge shaft (23) is formed in a reaction chamber wall in the region of the lower end of the sealing wall (11).

**Revendications**

1. Procédé de guidage d'un courant de matières solides en vrac dans au moins un réacteur à lit fluidisé, selon lequel la matière en vrac est introduite dans le réacteur à lit fluidisé à son extrémité supérieure, passe sur un premier plan de glissement et est extraite à sa sortie après passage sur un deuxième plan de glissement, le transport de la matière en vrac s'effectuant sur les deux plans de glissement sous le seul effet de la force de gravité en direction de la pente, caractérisé par le fait que la matière en vrac est transportée à partir d'un point situé au-dessus du réacteur et latéralement par rapport à celui-ci, le long du premier plan de glissement incliné et expulsée latéralement en aval du point de sortie en passant sur le deuxième plan de glissement incliné dans la même direction, tandis qu'en cas d'un montage parallèle et/ou en série de plusieurs réacteurs, la matière en vrac à introduire dans l'un des réacteurs est dérivée d'un courant de matières en vrac commun à plusieurs réacteurs, et plusieurs courants de matières en vrac étant conduits conjointement dans un puits d'évacuation après avoir été transportés séparément sur des plans de glissement inclinés.

2. Procédé selon la revendication 1, caractérisé par le fait que le courant d'évacuation commun des matières en vrac est exposé à un courant gazeux dirigé en sens opposé et que les particules de poussière entraînées par le courant gazeux sont éliminées par filtrage.

3. Procédé selon la revendication 2, caractérisé par le fait que la modification du courant gazeux exerce une influence sur la vitesse de descente des particules de matières en vrac évacuées dans le courant d'évacuation commun.

4. Procédé selon la revendication 1 ou 2, caractérisé par le fait que le courant gazeux est pré-réchauffé par échange thermique avec au moins une chambre de réaction afin d'éviter toute formation de condensat.

5. Installation de réacteurs, en particulier installation de réacteurs à lit fluidisé, comportant
– au moins une chambre de réaction (1) qui présente au moins une admission (7) et au moins un échappement (10, 15) pour le passage d'une matière solide en vrac de haut en bas, dirigée à contre courant à un gaz ;
– au moins un fond (9) d'arrivée des courants à travers lequel le gaz est conduit de bas en haut dans le produit en vrac se trouvant dans la chambre de réaction ;
– au moins un premier plan de glissement (4') disposé au-dessus de la chambre de réaction pour la matière en vrac, plan qui débouche sur son extrémité supérieure dans un puits ou une trémie (2, 2') et qui alimente l'admission de la chambre de réaction en matière en vrac, et
– au moins un deuxième plan de glissement (14) pour la matière en vrac disposée sous l'orifice d'échappement ;
– les plans de glissement (4', 14) présentent une inclinaison par rapport à l'horizontale telle que la matière en vrac est transportée dans la direction de la pente sous le seul effet de la force de gravité, caractérisée par le fait que le premier plan de glissement (4') et le deuxième plan de glissement (14) sont inclinés dans la même direction.

6. Installation de réacteur selon la revendication 5, caractérisée par le fait que le premier plan de glissement (4') est réalisé sous forme de fond de distribution (4) de la matière en vrac.

7. Installation de réacteur selon la revendication 5 ou 6, caractérisée par le fait que plusieurs chambres de réaction (1) sont superposées les unes aux autres, les premiers plans de glissement (4') de plusieurs chambres de réaction superposées étant dérivés, par leurs extrémités respectivement supérieures, d'un puits d'alimentation (2') de préférence vertical, et au moins une partie des deuxièmes plans de glissement (14) débouchant par leurs extrémités inférieures dans un puits d'évacuation (23) à travers lequel la matière en vrac est évacuée sous l'effet de la force de gravité.

8. Installation de réacteur selon l'une des revendications 5 à 7, caractérisée par le fait que le fond de répartition (4) formant le premier plan de glissement (4') est la paroi de fond d'un canal plat (3), et que la matière en vrac se trouvant dans ce canal est en rapport d'échange thermique avec l'espace intérieur de la chambre de réaction correspondante (1), de telle sorte que ladite matière en vrac peut être réchauffée par le réacteur.

9. Installation de réacteur selon la revendication 7 ou 8, caractérisée par le fait qu'un canal de répartition (3) de la matière en vrac, qui est délimité du côté du fond par le premier plan de glissement incliné (4') est muni d'une paroi de recouvrement sur la face supérieure de laquelle est conformé le deuxième plan de glissement incliné (14) servant à l'évacuation de la matière en vrac et associé à une chambre de réaction qui lui est superposée.

10. Installation de réacteur selon l'une des revendications 7 à 9, caractérisée par le fait que les premiers plans de glissement (4') amenant la matière en vrac et les deuxièmes plans de glissement (14) évacuant la matière en vrac présentent, deux par deux, un angle d'inclinaison sensiblement identique par rapport à l'horizontale.

11. Installation de réacteur selon la revendication 8 ou 9, caractérisée par le fait que la distance entre le premier plan de glissement incliné (4') et la paroi de recouvrement qui lui est superposée du canal de répartition de la matière en vrac augmente en direction du courant (5).

12. Installation de réacteur selon l'une des revendications 5 à 11, caractérisée par le fait que plusieurs tubes d'admission (7) plongent dans la chambre de réaction (1) en partant de chaque plan incliné (4) de répartition de la matière en vrac.

13. Installation de réacteur selon l'une des revendications 5 à 12, caractérisée par le fait que plusieurs tubes d'échappement de la matière solide (10) sont dirigés vers le bas en partant du fond d'arrivée des courants (9) et en passant à travers une paroi de fond (12) de la chambre de réaction.

14. Installation de réacteur selon la revendication 12 ou 13, caractérisée par le fait que les tubes d'admission (7) et/ou les tubes d'échappement (10) s'élargissent légèrement de haut en bas en forme de trompette.

15. Installation de réacteur selon l'une des revendications 5 à 14, caractérisée par le fait que plusieurs chambres de réaction (1), de préférence servant à des modes de traitement différents, sont montées en série et parcourues l'une après l'autre par le gaz.

16. Installation de réacteur selon la revendication 14, caractérisée par le fait que les chambres de réaction montées en série sont disposées de manière latéralement décalées deux par deux.

17. Installation de réacteur selon la revendication 14, caractérisée par le fait que les chambres de réaction (1) montées en série sont superposées.

18. Installation de réacteur selon l'une des revendications 5 à 17, caractérisée par le fait qu'au moins deux colonnes de chambres de réacteur superposées sont disposées côte à côte.

19. Installation de réacteur selon l'une des revendications 5 à 18, caractérisée par le fait qu'une admission de gaz (24) est disposée à l'extrémité inférieure et un dispositif de filtrage (25) à l'extrémité supérieure d'un puits d'évacuation (23) de la matière en vrac.

20. Installation de réacteur selon la revendication (19), caractérisée par le fait que l'admission du gaz (24) est reliée à une chambre de chauffage du gaz (26), laquelle est disposée entre deux chambres de réaction (1a, 1b) placées côte à côte et notamment en bas, et peut être chauffée par échange thermique avec lesdites chambres de réaction (1a, 1b).

21. Installation de réacteur selon l'une des revendications 7 à 20, caractérisée par le fait que des moyens de dérivation du courant de matière en vrac sont prévus dans le puits amenant la matière en vrac (2') au voisinage des points de dérivation des plans de glissement (4').

22. Installation de réacteur selon l'une des revendications 5 à 21, caractérisée par le fait que chaque chambre de réaction (1) possède du côté du fond, une paroi d'arrêt des gaz (11) qui est inclinée dans la même direction que le deuxième plan de glissement (14) disposé sous l'orifice de sortie (10, 15) et que, au voisinage de l'extrémité inférieure de la paroi d'arrêt des gaz (11) se trouve un orifice d'échappement (21) pratiqué dans une paroi de la chambre de réaction, orifice à travers lequel les particules de matières solides séparées du courant gazeux peuvent être expulsées dans le canal d'évacuation (13) ou le puits d'évacuation (23).

*Fig. 1*

AUFBEREITUNG

Fig. 2